# EUROPEAN PATENT APPLICATION

(11) **EP 2 535 485 A1**
(43) Date of publication of application: **19.12.2012**
(21) Application number: 11169778.5
(22) Date of filing: 14.06.2011
(51) Int. Cl.: E04H 12/08

(54) **Connection of metal segments of a tower**

(71) Applicant: SIEMENS AKTIENGESELLSCHAFT, 80333 München (DE)
(72) Inventor: Rasmussen, Anders Nygaard, 2200 Kobenhavn (DK); Winther-Jensen, Martin, 4690 Haslev (DK)

(57) **Abstract**

The invention relates to a method to connect metal segments of a tower, an arrangement for the connection of at least two tower segments and a wind turbine tower being erected by that method.

Metal segments of a tower are connected comprising the steps of connecting at least two metal segments of the tower by the use of connecting elements. A paste is provided between the tower segments for filling at least a part of a gap between the segments. The paste is cured wherein the cured paste absorbs at least a part of a load originated by the connected segments.

## Description

The invention relates to a method to connect metal segments of a tower, an arrangement for the connection of at least two tower segments and a wind turbine tower being erected by the method.

A tower can be built with a plurality of metal tower segments that are arranged on top of or next to each other. These tower segments are connected by connecting elements like screws, bolts, splice and/or by the help of additional plates often along flanges at the sides of the tower segments.

A tower, for example a wind turbine tower, often has more than 2 meters in diameter. With a diameter bigger than 2 meters the segments have to be machined very precisely to avoid gaps in the connection where the tower segments are connected together. Thus the production of the tower segments can be very expensive.

Thus a gap between two tower segments up to several millimeters is tolerated. The gap is on site filled with steel sheets, strips or shims during the erection of the tower to tighten the tower wall. This method is time-consuming and personnel-intensive.

Gaps in the flanges of the tower lead to a faster fatigue damage in the screws and bolts and the tower. This results in a shorter lifetime of the tower.

The interior of the tower often comprises electric equipment and is therefore kept on a predetermined level of temperature and humidity. Depending on the location where the tower is erected sand and dust or the salty spray of the sea have to be kept out of the tower.

Thus the connections of the tower segments should be airtight and /or watertight.

If a bigger gap in the connection occurs, e.g. more than 3 mm, the tower segments must be re-machined to minimize the gap. For this the tower segment is transported to a workshop or is re-machined on site.

The very high preciseness needed and the time and effort for re-treatment of segments makes the tower very expensive.

The aim of the invention is to provide a method to connect tower segments with a tight connection that allows less effort in the precision in machining the tower segments and to provide a tower erected by this method.

This aim is reached by the features of the independent claims. Preferred configurations of the invention are object of the dependent claims.

Metal segments of a tower are connected comprising the steps of connecting at least two metal segments of the tower by the use of connecting elements. A paste is provided between the tower segments for filling at least a part of a gap between the segments. The paste is cured wherein the cured paste absorbs at least a part of a load originated by the connected segments.

The paste at least partially absorbs the load, thus the paste at least partially incorporates the load.

Thus the load might be at least partially neutralized by the paste and/or the load might be at least partially transferred from one segment to the other segment.

Thus the gap present in the connection between connected segments is filled. Thus the gaps are closed and the ambient atmospheric influence is kept out of the tower. Furthermore the paste absorbs at least a part of a load originated by the connected segments. Thus the load transfer over the gap is improved. Thus the fatigue of the connecting elements is reduced and the life-time of the connecting elements is increased.

The connecting elements can be screws or bolts. Thus the connection is detachable.

Preferably the step of curing the paste is performed by applying heat. Thus a paste can be used that cures with a higher temperature than the ambient temperature. Thus a paste with different properties can be used, like higher fatigue strength, a higher flexural resistance or a different creep characteristic.

Thus the paste is applied to the tower segments and the tower segments can than be adjusted. After the adjusting is finished the paste is cured. Thus the paste is cured at a predetermined time. Thus the time for adjusting the tower segments can be easily extended.

Preferably at least a part of the provided paste, applied to the gap, is protected against ambient influence for at least a part of the curing period. Thus a paste can be used that has to be protected against ambient influence in at least a part of the curing time. Thus a paste with different properties can be used, like higher fatigue strength, a higher flexural resistance or a different creep characteristic.

Preferably metal segments of a wind turbine tower are connected. Thus wind turbine towers are often erected in areas with extreme ambient and weather conditions. Thus especially wind turbine towers that are erected off-shore have to be protected against the salt in the air. Thus electronic equipment within the tower is protected from extreme ambient and weather conditions.

In an arrangement for the connection of at least two tower segments at least two segments of a metal tower are connected by connection means. A paste is arranged between the tower segments thus at least a part of a gap between the segments is filled. The cured paste is prepared to absorb at least a part of a load originated by the connected segments.

Preferably the paste is prepared to cure at an ambient temperature between -20 °C and +30°C. Thus the paste does not need an additional source of heat to cure. Thus no heating equipment is needed during installation. Thus the time to install and de-install the heating equipment is saved.

Preferably the paste is prepared to cure at a temperature above +30°C. Thus different types of pastes can be used with different properties. Thus for example a paste with a higher flexural resistance or a paste with a lower creep characteristic can be used. Thus the properties of the paste can be optimized for the desired use.

Preferably the paste is prepared to cure under the influence of ambient or atmospheric weather conditions like rain, snow or sunshine. Thus the paste can cure under the weather conditions present at the site where the tower segments are connected. Thus the paste cures under the influence of rain, snow, salt in the air or high humidity in the air. Thus the paste does not have to be protected against weather and ambient conditions present. Thus no cover is needed to protect the paste. Thus the time to install and un-install the cover is saved.

Preferably the paste is prepared for an operating temperature range between -40°C and +60°C**.** Thus the paste will show its properties under the ambient temperature present in the place where the tower segments are connected or the tower is erected later on.

Thus the paste can be used at most of the sites where tower segments or towers with segments are used. Thus the paste does not have to be protected after it is cured. Thus no additional protection is needed and the time to install a protection material is saved.

Preferably the paste shows a predetermined high flexural resistance and/or a predetermined low creep characteristic. Thus the paste has enough strength to absorb loads from the tower segments, without changing its form or place when absorbing a load. Furthermore the paste will stay in place after it is cured and will not move under the influence of the load. Thus no additional coverage to hold the paste in place is needed.

Preferably the paste is thixotropic before it is cured. Thus the paste can adapt a low viscosity under the influence of mechanical forces. Thus the paste can be placed easily between the tower segments, especially in gaps. Thus the paste can also reach into fine gaps and small openings.

Thus the low viscosity will change to a higher viscosity when no further mechanical forces are applied. Thus the paste will stay in place until it is cured. Furthermore the paste will not be thixotrophic after it is cured. Thus the paste can absorb load after it is cured without changing its viscosity.

Preferably the paste comprises a polymer or a non-shrink grout.

Preferably the polymer is a condensation polymer, an addition polymer or a polymerizate.

A non-shrink grout shows a very high vibration resistance. Thus a paste comprising a non-shrink grout can be used in towers with a high load in vibration like for example in wind turbine towers.

A non-shrink grout cures under normal ambient temperatures, like they are present at an erection site. Thus a paste comprising non-shrink grout can cure under conditions present at the site where the connection between the tower segments is made. Thus this paste does not need a heating to cure. Thus the time and cost to provide and install a heating is saved.

Preferably the polymer is a polyurethane-hybrid or an epoxy resin or a polymer-bitumen.

A polyurethane-hybrid shows a great hardness, a good resistance to chemicals, great stability of the dispersion over a wide pH range, good freeze-thaw stability. Thus the polyurethane-hybrid is suitable for a wide range of weather conditions, like cold and humid climate, or salty environment.

Thus it can be used in a wide range of erection sites of the tower, with different weather conditions. Thus it can also be used in off-shore installations.

A polyurethane hybrid shows a very good adhesion to steel. Thus the connection between the paste and the tower segments will be very strong. Thus the paste can support the tower segments very good. Thus the fatigue effect on the connecting elements is very low.

A polyurethane hybrid can be a polyurethane resin shows a high range of working temperature, like for example from - 40°C to +100°C. Thus a paste comprising a polyurethane resin can be used also for very low temperature areas and also for very hot climates. Thus, when applied to a wind turbine tower the tower can also be erected in very northerly sites with very good wind conditions.

An epoxy resin can cure under normal ambient and atmospheric conditions that are present on the erection site of the tower. Thus the gap with the paste applied does not have to be covered during the curing period.

A polymer-bitumen shows hydrophobic properties. Thus a paste comprising a polymer-bitumen shows a water repellant effect. Thus the paste can be used under the influence of a climate with a high humidity, like rain.

A polymer-bitumen is very stabile under the influence of light acids or bases. Thus a paste comprising polymer-bitumen can be used under conditions where light acids or light bases are present. Thus the paste can be used in areas with a certain air pollution like in industrial surroundings. Thus the paste can also be used to connect metal tower elements for towers like chimneys.

A wind turbine tower contains at least one arrangement for the connection of at least two tower segments. A wind turbine tower takes in a huge load from the wind which has to be transferred from the nacelle through the tower to the foundation of the tower.

Thus a wind turbine tower needs a strong connection between the tower segments. A wind turbine tower can show a diameter of more than 2 meters. Thus the flanges or the connections between the tower segments are very expensive when they are machined so precisely that they show no gaps after connecting.

Thus the stability and the life-time of a wind turbine tower is increased by applying a paste that is prepared to absorb at least a part of the loads originated by the connected segments.

The invention is shown in more detail by help of figures.

The figures show a preferred configuration and do not limit the scope of the invention.
- FIG 1: shows a connection of two tower segments with the paste applied,
- FIG 2: shows a different view of the two tower segments with the paste applied,
- FIG 3: shows another embodiment of the connection invented,
- FIG 4: illustrates the step of heating the paste,
- FIG 5: shows the step of protecting the paste against ambient influence.

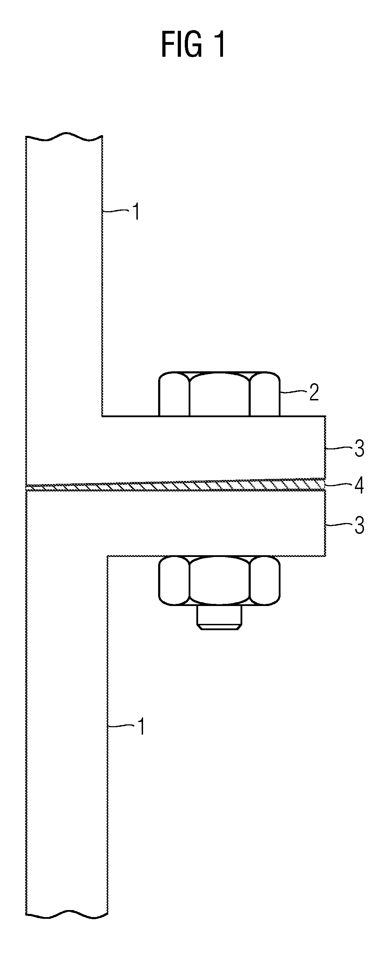

FIG 1 shows a connection of two tower segments 1 with the paste 4 applied. The two tower segments 1 are connected by the use of connecting means 2 at a flange 3 to build a tower. At the connection between the two flanges 3 there is a gap between the two tower segments 1. The gap is filled with a paste 4.

The connecting means 2 are in this case bolts. On the bolt there is a certain load due to the stress in the tower, vibrations and movement of the tower due to the force of wind. The paste 4 is supporting the two tower segments 1, so that the load present in the tower segments 1 is transferred from one segment to the other segment. Thus the movement of the flanges 3 along the bolts 2 is reduced and the lifetime of the connecting elements 2 and the tower segments 1 is improved.

The paste 4 can be applied from both sides of the flanges 3. In the case of a thixotropic paste the paste 4 can be applied in a state of very low viscosity, so that the paste can easily flow into the gap, also in areas where the gap is narrow. After resting in the gap, the viscosity increases and the paste 4 will stay in the gap.

As the paste 4 fills the gap, the influence of ambient and atmospheric conditions like rain, snow, humidity and wind on the inner space of the tower is reduced. In the case the tower is erected off-shore or onshore close to the sea, also the entry of salty spray is reduced.

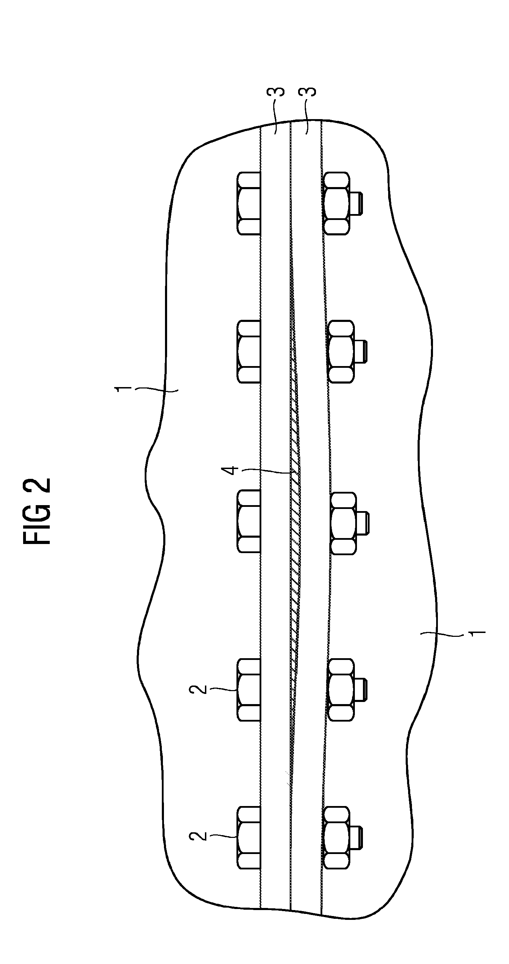

FIG 2 shows a different view of the two tower segments 1 with the paste 4 applied. A tower segment 1 is connected to another tower segment 1 at flanges 3 by the use of connecting elements 2. The gap present between the tower segments 1 is filled with a paste 4 that is prepared to support the tower segments 1 when it is cured.

On the tower segments 1 there is a certain load, which has to be transferred from one tower segment 1 to the other. The load is transferred from the first tower segment 1 to the second tower segment 1 over the flanges 3 and the connecting elements 2.

The supporting paste 4 helps to transfer the load from one tower segment to the other and thereby reduced the fatigue of the connecting elements 2. Thus the lifetime of the connecting elements 2 and the tower segments 1 is improved.

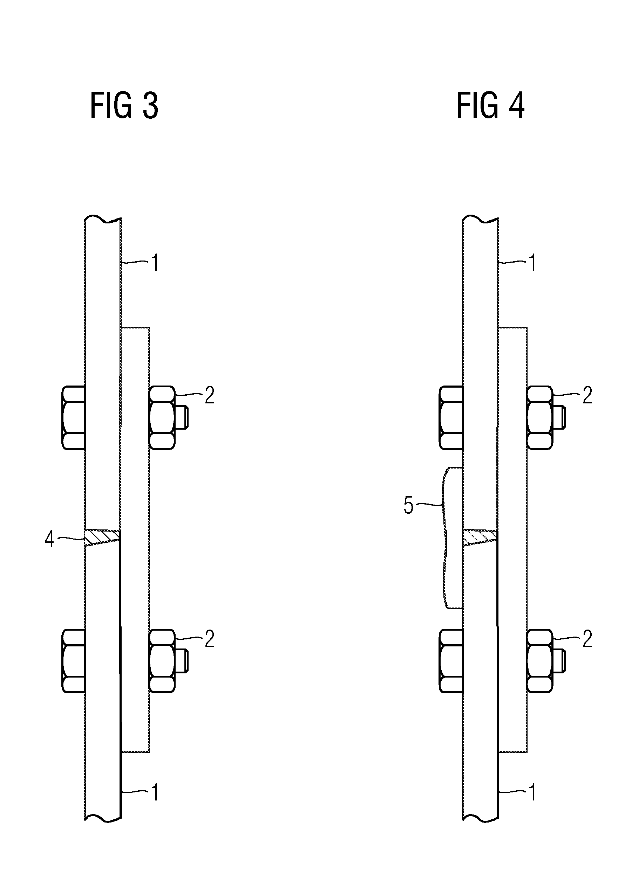

FIG 3 shows another embodiment of the connection invented. The two tower segments 1 are connected by the help of connecting elements 2. In this embodiment the connecting elements are bolts and an element that reaches from one tower segments 1 to the other tower segment 1. Between the tower segments 1 a gap is filled with a paste 4. This paste 4 is prepared to support the tower segments 1 in a way that the load present in one tower segment 1 can be transferred to the other tower segment 1. Thus stress on the connecting elements 2 is reduced and the life-time of the connecting elements 2 is improved.

As the paste 4 is filling the gap the influence of ambient and atmospheric conditions on the inner space of the tower is reduced. The paste can easily be applied from one side of the tower wall.

FIG 4 illustrates the step of heating the paste 4. The drawing shows the connection of two tower segments 1 that are connected by the help of connecting elements 2. The paste 4 is applied to the gap between the two tower elements 1. In the case the applied paste 4 needs a temperature to cure that is higher than the ambient temperature, the paste 4 filled in the gap can be heated by a heating device 5.

A heating device 5, like a heater mat, is attached to one side of the connection. So the paste 4 present in the gap at the connection can be heated during at least a part of the curing time.

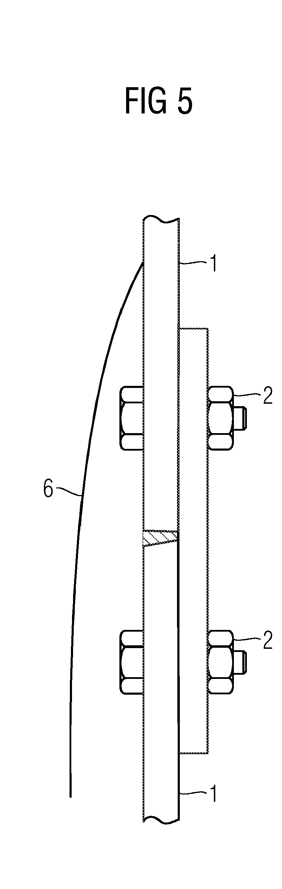

FIG 5 shows the step of protecting the paste 4 against ambient influence. The drawing shows the connection of two tower segments 1 that are connected by the help of connecting elements 2. The paste 4 is applied to the gap between the two tower elements 1.

On one side of the tower wall the paste 4 in the gap is protected against the influence of the ambient or atmospheric conditions by a cover 6 that is attached to one of the tower elements 1 and is reaching over the gap and the paste 4. This cover can be a tarpaulin or a strip of a plastic foil. It can be attached after the paste 4 is applied and can be removed after the paste 4 is cured. This is necessary, when the paste 4 has to be protected against ambient or atmospheric influences like snow, rain, high humidity or salt in the air during the period of curing.

## Claims

1. Method to connect metal segments of a tower, comprising the steps of
- connecting at least two metal segments of the tower by the use of connecting elements,
- providing paste between the tower segments for filling at least a part of a gap between the segments,
- curing the paste, wherein the cured paste absorbs at least a part of a load originated by the connected segments.

2. Method according to claim 1, wherein the step of curing the paste is performed by applying heat.

3. Method according to one of the preceding claims, whereby at least a part of the provided paste, applied to the gap, is protected against ambient influence for at least a part of the curing period.

4. Method according to one of the preceding claims, whereby metal segments of a wind turbine tower are connected.

5. Arrangement for the connection of at least two tower segments,
- wherein at least two segments of a metal tower are connected by connection means,
- wherein a paste is arranged between the tower segments thus at least a part of a gap between the segments is filled,
- wherein the cured paste is prepared to absorb at least a part of a load originated by the connected segments.

6. Arrangement according to claim 5, whereby the paste is prepared to cure at an ambient temperature between -20 °C and +30°C.

7. Arrangement according to claim 5, whereby the paste is prepared to cure at a temperature above +30°C.

8. Arrangement according to claim 5 to claim 7, whereby the paste is prepared to cure under the influence of ambient or atmospheric weather conditions like rain, snow or sunshine.

9. Arrangement according to claim 5 to claim 8, whereby the paste is prepared for an operating temperature range between -40°C and +60°C.

10. Arrangement according to claim 5 to claim 9, whereby the paste shows a predetermined high flexural resistance and/or a predetermined low creep characteristic.

11. Arrangement according to claim 5 to claim 10, whereby the paste is thixotropic before it is cured.

12. Arrangement according to claim 5 to claim 11, whereby the paste comprises a polymer or a non-shrink grout.

13. Arrangement according to claim 12, whereby the polymer is a polyurethane-hybrid or an epoxy resin or a polymer-bitumen.

14. Wind turbine tower, where the tower contains at least one arrangement according to claim 5 to claim 13.

15. Wind turbine tower being erected by the method according to claim 1 to 4.
